# EUROPÄISCHE PATENTSCHRIFT

(11) **EP 2 484 471 B1**
(45) Veröffentlichungstag und Bekanntmachung des Hinweises auf die Patenterteilung: **21.08.2013**
(21) Anmeldenummer: 11000795.2
(22) Anmeldetag: 02.02.2011
(51) Int. Cl.: B23C 5/06, B23C 5/08, B23C 5/18, B27G 13/08

(54) **Bearbeitungswerkzeug**
Machining tool
Outil d'usinage

(43) Veröffentlichungstag der Anmeldung: 08.08.2012
(73) Patentinhaber: Ledermann GmbH & Co. KG, 72160 Horb (DE)
(72) Erfinder: Dressler, Martin, Dr., 73614 Schorndorf (DE)
(74) Vertreter: Zurhorst, Stefan

(56) Entgegenhaltungen:
- EP-A1- 2 119 520

## Beschreibung

Die Erfindung betrifft ein Bearbeitungswerkzeug für die zerspanende Bearbeitung von Werkstoffen, insbesondere für Holz oder holzartige Werkstoffe, Metalle, Kunststoffe und/oder Verbundwerkstoffe.

Bearbeitungswerkzeuge für die zerspanende Bearbeitung von Werkstoffen haben eine beschränkte Standzeit, die durch den Zustand der Schneidkanten ihrer Schneiden limitiert ist. Ein wesentlicher Faktor für die Beeinflussung der Standzeit ist der Keilwinkel der Schneidkante. Ein möglichst großer Keilwinkel vergrößert die Standzeit und führt zu einer verbesserten Unempfindlichkeit der Schneide gegen Schärfeverlust und Ausbrüche.

Der Keilwinkel kann aber nicht beliebig groß gewählt werden, da er durch andere Einflussfaktoren begrenzt ist. Viele Werkstoffe lassen sich nicht oder nur schlecht mit kleinen Spanwinkeln bearbeiten. Zu kleine Spanwinkel führen bei Holz und Holzwerkstoffen zu schlechten Oberflächenqualitäten, weshalb ein hinreichend großer positiver Spanwinkel gewählt werden muss.

Auch der Freiwinkel wird nach dem Stand der Technik, beispielsweise nach EP 2 119 520 A1, positiv mit hinreichend hohem Betrag ausgeführt, da die Freifläche der Schneide ansonsten erhebliche Reibkräfte am zu zerspanenden Werkstück erzeugt. Der Kontakt der Freifläche mit dem Werkstück verhindert außerdem ein sauberes Eindringen der Schneidkante in das zu zerspanende Material.

Nach allgemein gültiger Definition wird die Geometrie einer Schneide bzw. deren Schneidkante durch den Freiwinkel, den Keilwinkel und den Spanwinkel bestimmt, wobei diese drei genannten Winkel in einer Ebene gemessen werden, die einen Punkt auf der Schneidkante enthält und in diesem Punkt senkrecht zur Schneidkante liegt. Der Freiwinkel, der Keilwinkel und der Spanwinkel ergeben zusammen aufaddiert 90°. Aus dem Erfordernis großer positiver Spanwinkel und ebenfalls positiver Freiwinkel und der Aufsummierung von Freiwinkel, Spanwinkel und Keilwinkel zu 90° folgt, dass der verbleibende Keilwinkel deutlich kleiner als 90° sein muss und in seiner Größe limitiert ist.

Dies führt dazu, dass ein Kompromiss gefunden werden muss. Eine Verkleinerung des Keilwinkels kann zwar wegen des daraus folgenden größeren Spanwinkels und ggf. auch des daraus folgenden größeren Freiwinkels zu einem besseren Zerspanungsergebnis führen. Gleichzeitig führt dies bei der Materialbearbeitung aber auch zur erhöhten Gefahr von Schneidenausbrüchen und zu einer schnelleren Abstumpfung der Schneidkante. Umgekehrt verbessert eine Vergrößerung des Keilwinkels zwar die Standzeit, während aber gleichzeitig infolge des verringerten Spanwinkels und/oder des verringerten Freiwinkels das Zerspanungsergebnis schlechter werden kann. In den beiden vorgenannten gegenläufigen Tendenzen ist ein Kompromiss zu wählen, der im Ergebnis nicht immer zufriedenstellend ist.

Der Erfindung liegt die Aufgabe zugrunde, ein Bearbeitungswerkzeug für die zerspanende Bearbeitung von Werkstoffen mit erhöhter Standzeit und gleichzeitig verbessertem Zerspanungsergebnis anzugeben.

Diese Aufgabe wird durch ein Bearbeitungswerkzeug mit den Merkmalen des Anspruchs 1 gelöst.

Die Erfmdung geht zunächst davon aus, dass Freiwinkel, Keilwinkel und Spanwinkel in einer Querschnittsebene der Schneide gemessen werden, die in einem Punkt auf der Schneidkante senkrecht zur Schneidkante liegt. Der in dieser Querschnittsebene ermittelte Keilwinkel wirkt als Maßstab für die Standfestigkeit der Schneidkante.

Nach der Erfindung sind die Schneidkanten aber auch derart angeordnet, dass ein Achswinkel und ein Einstellwinkel ausgebildet sind. Für die Bestimmung des Schnitt- bzw. Zerspanungsergebnisses ergibt sich aus dem Achswinkel ein abweichendes Koordinatensystem, welches nicht in.der Querschnittsebene der Schneiden, sondern in der Drehebene liegt. In der Drehebene gemessen bilden sich ein effektiver Freiwinkel, ein effektiver Keilwinkel und ein effektiver Spanwinkel aus, die von den vorgenannten Frei-, Keil- und Spanwinkeln abweichen. Es sind aber die vorgenannten effektiven Winkel, die für das Schnitt- bzw. Zerspanungsergebnis wirksam sind.

Hierauf aufbauend beruht die Erfmdung auf der Erkenntnis, dass bei geeigneter gegenseitiger Abstimmung von Achswinkel und Einstellwinkel entgegen der Lehre nach dem Stand der Technik sich ein Freiwinkel wählen lässt, dessen Betrag null oder negativ ist. Das Zusammenspiel von Achswinkel und Einstellwinkel führt nämlich dazu, dass selbst bei negativem Freiwinkel der effektive Freiwinkel gleich null oder sogar positiv wird.

Im Ergebnis führt dies dazu, dass wegen des Freiwinkels mit dem Betrag von null oder mit einem negativen Betrag ein deutlich größerer Keilwinkel als bisher ausgebildet werden kann. Dies erhöht die Standzeit der Schneidkante infolge geringerer Neigung zum Stumpfwerden und infolge geringerer Neigung zum Ausbrechen. Da aber gleichzeitig der in der Drehebene wirkende effektive Freiwinkel ≥ 0 ist, tritt trotz vergrößertem Keilwinkel keine Beeinträchtigung des Schnitt- bzw. Zerspanungsergebnisses ein. Infolge des in der Querschnittsebene vergrößerten Keilwinkels bleibt außerdem mehr Spielraum, auch den effektiven Spanwinkel zur Verbesserung des Schnittergebnisses zu vergrößern.

Es kann zweckmäßig sein, dass der in der Querschnittsebene der Schneide gemessene Freiwinkel gleich null ist. In vorteilhafter Weiterbildung ist er < 0°, liegt bevorzugt in einem Bereich von einschließlich -1° bis einschließlich -10°, und beträgt insbesondere zumindest näherungsweise -6°.

In weiterer vorteilhafter Weiterbildung liegt der Achswinkel in einem Bereich von einschließlich 55° bis < 90°, bevorzugt in einem Bereich von einschließlich 60° bis einschließlich 80° und beträgt insbesondere etwa 70°, wobei der Einstellwinkel in einem Bereich von einschließlich 20° bis einschließlich 70° und insbesondere in einem Bereich von einschließlich 30° bis einschließlich 60° liegt.

Aus den vorgenannten Winkelangaben ergeben sich deutliche Unterschiede zwischen den in der Querschnittsebene der Schneide gemessenen Winkeln und den in der Drehebene gemessenen effektiven Winkeln. In der Folge kann ein vergleichsweise großer, die Standzeit erhöhender Keilwinkel gewählt werden, während gleichzeitig in der für das Schnittergebnis relevanten Drehebene der effektive Keilwinkel und der effektive Spanwinkel für ein gutes Schnittergebnis mit hinreichend großen positiven Beträgen eingestellt bzw. ausgebildet werden können.

Es kann zweckmäßig sein, den in der Querschnittsebene der Schneide gemessenen und für die Standzeit relevanten Keilwinkel mit einem nach dem Stand der Technik üblichen Betrag von < 90° auszubilden, wobei sich dann sehr große positive, in der Drehebene gemessene effektive Spanwinkel und/oder effektive Freiwinkel einstellen. Vorteilhaft ist der in der Querschnittsebene der Schneide gemessene Keilwinkel ≥ 90°, liegt bevorzugt in einem Bereich von einschließlich 90° bis einschließlich 110°, und beträgt insbesondere etwa 100°. Hierdurch wird eine erhebliche Verbesserung der Standzeit der Schneide erreicht, während sich gleichzeitig für ein gutes Schnittergebnis noch hinreichend große Span- und Freiwinkel einstellen lassen.

Bei bestimmten Ausgestaltungen des Bearbeitungswerkzeuges beispielsweise mit einem entlang der Schneidkanten konstanten Einstellwinkel zur Herstellung beispielsweise einer Fase, aber auch bei einer Profilierung der Schneidkanten mit entlang der Schneidkanten nicht allzu groß veränderlichen Einstellwinkeln zur Erzeugung einer profilierten Zerspanungsoberfläche kann es vorteilhaft sein, dass die Schneidkante entlang ihrer gesamten Länge auf sämtlichen Punkten einen Freiwinkel von ≤ 0° und einen effektiven Freiwinkel von ≥ 0° aufweist. Hier ergeben sich für die gesamte Schneidkante die oben beschriebenen Vorteile insbesondere hinsichtlich der Erhöhung der Standzeit bei gleichzeitiger Verbesserung des Schnittergebnisses. Bei alternativen, stärker von der Kegelform abweichenden und insbesondere sehr unregelmäßig profilierten Flugkreisprofilen zur Erzeugung profilierter Kanten am Werkstück können an der Schneide Teilbereiche entstehen, die aufgrund ihres örtlichen Einstellwinkels den geometrischen Voraussetzungen nicht genügen, die für das erfindungsgemäße Zusammenspiel von Freiwinkel und effektivem Freiwinkel erforderlich sind. In solchen Fällen kann es zweckmäßig sein, dass die Schneidkante nur auf Punkten entlang eines geeigneten Teilabschnittes der Schneidkante einen Freiwinkel von ≤ 0° und einen effektiven Freiwinkel von ≥ 0° aufweist.

Bei den Umfangsschneiden muss die Konturverzerrung, die sich durch den großen Achswinkel der Schneidkanten gegenüber der gewünschten Bearbeitungskontur ergibt, durch eine entsprechend angepasste Kontur der Schneidkante korrigiert werden. Die Schneidkanten der Schneiden sind deshalb vorteilhaft derart ballig profiliert bzw. geschliffen, dass sie entlang ihrer gesamten Länge auf einem gemeinsamen Flugkreisprofil, insbesondere auf einem gemeinsamen Flugkreiskegel verlaufen, wobei das Flugkreisprofil dem gewünschten Fräsprofil entspricht. Hierdurch entsteht eine exakte, beispielsweise kegelige Fräskontur, die trotz der großen Achswinkel der Schneiden zur Ausbildung beispielsweise einer ebenen Fase am Werkstück führt. Bei einer von der Kegelform abweichenden Kontur ist der Verlauf der Umfangsschneiden in analoger Weise zu korrigieren.

Es kann zweckmäßig sein, die erfindungsgemäße Schneidengeometrie einstückig im Bearbeitungswerkzeug auszubilden. In vorteilhafter Weiterbildung umfasst das Bearbeitungswerkzeug einen Grundkörper und separat davon als Schneidplatten ausgeführte Schneiden aus einem hochharten Schneidstoff, insbesondere aus Hartmetall, Schneidkeramik, monokristallinem Diamant, PKD (polykristalliner Diamant) oder CVD (Chemical Vapor Deposition = chemische Gasphasenabscheidung insbesondere für die Diamantbeschichtung), die üblicherweise nur in ebener Form hergestellt werden, aber auch insbesondere durch Nachbearbeitung profiliert werden können. Hierdurch lässt sich die Standzeit des Bearbeitungswerkzeuges in Verbindung mit den großen Keilwinkeln dieser Schneidenwerkstoffe weiter erhöhen und dennoch aufgrund des verringerten wirksamen bzw. effektiven Keil- bzw. Schnittwinkels ein erstklassiges Oberflächenergebnis erzielen.

Ein Ausführungsbeispiel der Erfindung ist nachfolgend anhand der Zeichnung näher beschrieben. Es zeigen:
- Fig. 1: in einer perspektivischen Ansicht ein erfindungsgemäß ausgeführtes Bearbeitungswerkzeug mit Schneiden zur Erzeugung einer Fase am Werkstück;
- Fig. 2: eine Umfangsansicht der Anordnung nach Fig. 1 mit Einzelheiten zur Winkelausrichtung der Schneiden;
- Fig. 3: eine perspektivische Detailansicht des Bearbeitungswerkzeuges nach den Fig. 1 und 2 mit Details einer einzelnen Schneide in seiner Querschnittsansicht;
- Fig. 4: eine schematische Draufsicht einer Schneide nach den Fig. 1 bis 3 mit Angaben für unterschiedliche, in den Fig. 5 und 6 dargestellte Querschnitte;
- Fig. 5: eine Querschnittsdarstellung der Schneide nach Fig. 4 entsprechend der Ansicht nach Fig. 3 in einer senkrecht zur Schneidenlängsachse liegenden Querschnittsebene entlang der Linie V-V nach Fig. 4;
- Fig. 6: eine Schnittdarstellung der Schneide nach Fig. 4 in einem in der Drehebene liegenden Querschnitt entlang der Schnittlinie VI-VI nach Fig. 4 mit Angaben zu den effektiven Schneidenwinkeln.

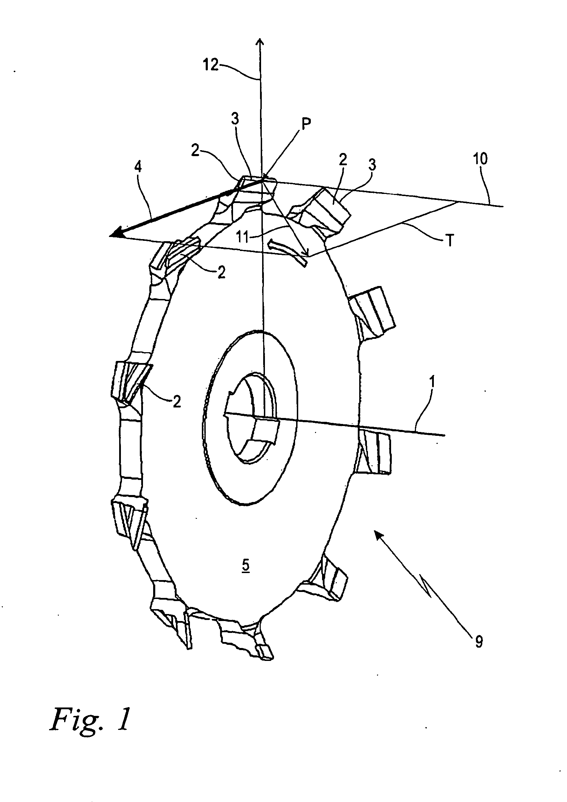

Fig. 1 zeigt in einer perspektivischen Ansicht ein Ausführungsbeispiel eines erfmdungsgemäßen Bearbeitungswerkzeuges 9 für die zerspanende Bearbeitung von Werkstoffen, wobei das gezeigte Ausführungsbeispiel für die zerspanende Bearbeitung von Holz oder holzartigen Werkstoffen vorgesehen ist. Es kann aber auch eine Ausführung für beliebige andere Werkstoffe wie insbesondere Metalle, Kunststoffe und/oder Verbundwerkstoffe zweckmäßig sein.

Das Bearbeitungswerkzeug 9 ist zum drehenden Antrieb um eine Drehachse 1 vorgesehen und weist hierzu einen kreisscheibenförmigen Grundkörper 5 auf, an dessen Umfangsbereich eine Anzahl von Schneiden 2 mit jeweils einer Schneidkante 3 angeordnet sind. Es ist mindestens eine Schneide vorzusehen. Im gezeigten Ausführungsbeispiel sind zehn Schneiden 2 gleichmäßig über den Umfang des Grundkörpers 5 verteilt.

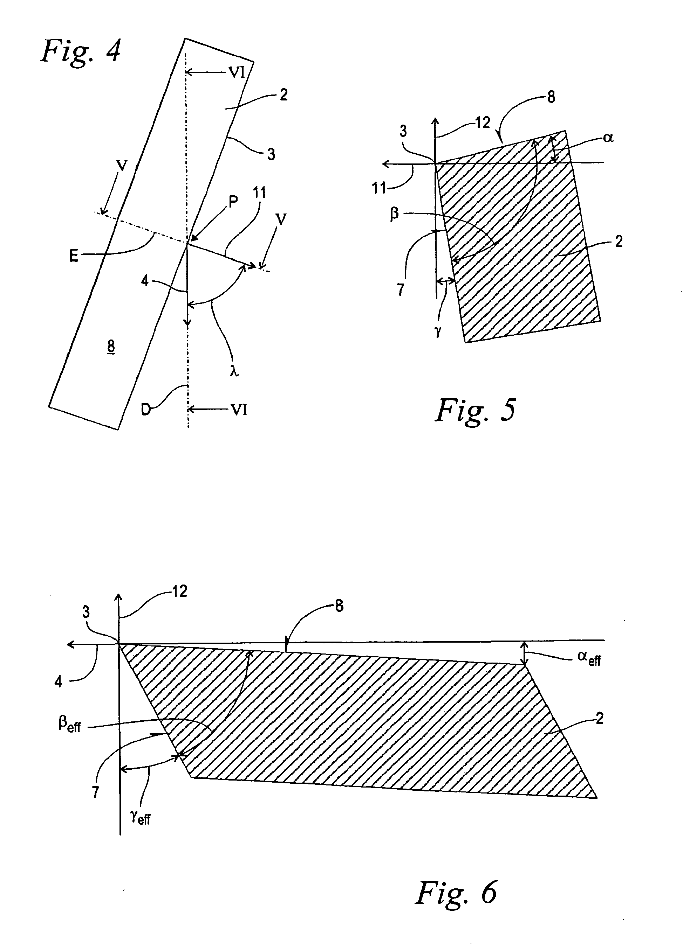

Entlang jeder einzelnen Schneidkante 3 kann ein beliebiger Punkt P als Referenzpunkt gewählt werden. Ausgehend von der Drehachse 1 verläuft durch jeden Punkt P der Schneidkante 3 eine Radialrichtung 12. Infolge der Drehbewegung des Bearbeitungswerkzeuges 9 um die Drehachse 1 führt jeder einzelne Punkt P der Schneidkante 3 eine Drehbewegung in einer Drehbewegungsrichtung 4 tangential zum Umfang des Bearbeitungswerkzeuges 9 im Punkt P aus. Außerdem verläuft durch jeden Punkt P eine Gerade 10, die parallel zur Drehachse 1 und damit senkrecht zur Radialrichtung 12 liegt. Die Drehbewegungsrichtung 4 liegt senkrecht zur Geraden 10 und auch senkrecht zur Radialrichtung 12. Außerdem geht vom Punkt P ein Richtungspfeil 11 aus, der senkrecht zur Radialrichtung 12 und auch senkrecht zur Schneidkante 3 im Punkt P liegt. Damit liegt der Richtungspfeil 11 auch in einer durch die Gerade 10 und die Drehbewegungsrichtung 4 aufgespannten Tangentialebene T. Die Bedeutung des Richtungspfeils 11 wird weiter unten im Zusammenhang mit der Beschreibung zu den Fig. 4 und 5 deutlich.

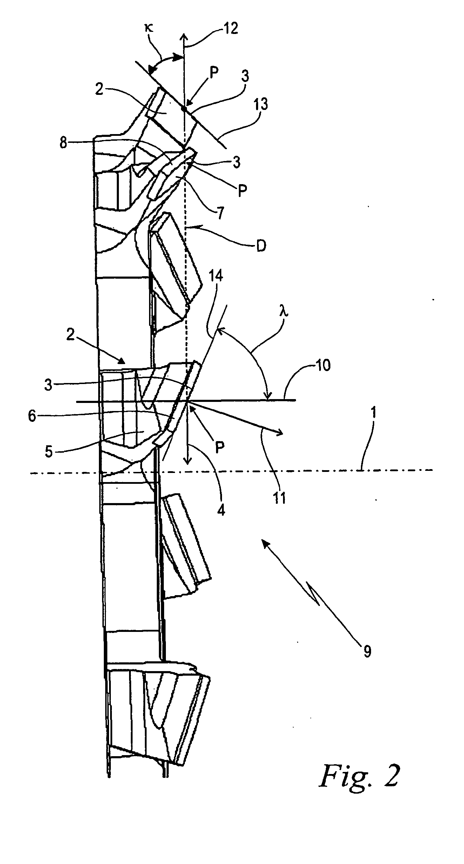

Fig. 2 zeigt eine Umfangsansicht des Bearbeitungswerkzeuges 9 nach Fig. 1, wobei gleiche Merkmale mit gleichen Bezugszeichen versehen sind. Zum konstruktiven Aufbau ist zu erkennen, dass die Schneiden 2 als separat vom Grundkörper 5 ausgeführte Schneidplatten 6 ausgebildet sind, die am Grundkörper 5 befestigt sind. Der Grundkörper 5 besteht im gezeigten Ausführungsbeispiel aus Werkzeugstahl, kann aber auch aus Hartmetall, Schwermetall, Leichtmetall wie Aluminium oder dgl. sowie aus anderen Werkstoffen gebildet sein. Die Schneidplatten 6 bestehen aus einem hochharten Schneidstoff wie Hartmetall, Schneidkeramik, monokristallinem Diamant, PKD oder CVD. Die Schneidplatten 6 können fest am Grundkörper 5 beispielsweise durch Verlöten, Verkleben, Verschweißen oder dergleichen befestigt sein. Alternativ kann eine lösbare Befestigung zweckmäßig sein, bei der die Schneidplatten 6 beispielsweise auf einem Träger befestigt und dabei mit dem Grundkörper 5 verschraubt, geklemmt oder formschlüssig gehalten sind. Die Schneiden 2 bzw. die Schneidplatten 6 sind in ihrer räumlichen Ausrichtung fest vorgegeben am Grundkörper 5 fixiert. Es kann aber auch zweckmäßig sein, die räumliche Ausrichtung der Schneiden 2 bzw. der Schneidplatten 6 relativ zum Grundkörper 5 einstellbar zu gestalten. Außerdem kann es zweckmäßig sein, dass die Schneiden 2 einstückig bzw. monolithisch mit dem Grundkörper 5 ausgebildet sind.

Aus der radialen Draufsicht des Bearbeitungswerkzeuges 9 nach Fig. 2 ergeben sich des Weiteren verschiedene geometrische Merkmale: Es ist zu erkennen, dass die Drehbewegungsrichtung 4 senkrecht zur Geraden 10 und damit auch senkrecht zur Drehachse 1 liegt. Durch die Drehbewegungsrichtung 4 und die durch die einzelnen Punkte P verlaufenden Radialrichtungen 12 wird eine Drehebene D aufgespannt, die den jeweils für die nachfolgenden Betrachtungen relevanten Punkt P beinhaltet, und die außerdem senkrecht zur Drehachse 1 liegt. Infolge der radialen Ansicht des Bearbeitungswerkzeuges 9 nach Fig. 2 erscheint die Drehebene D als Linie, die durch den Punkt P senkrecht zur Drehachse 1 verläuft.

Die Schneiden 2 sind derart angeordnet und weisen eine derart geformte Schneidkante 3 auf, dass die Schneidkanten 3 infolge ihrer Drehung um die Drehachse 1 ein um die Drehachse 1 umlaufendes Flugkreisprofil 13 beschreiben. Im gezeigten Ausführungsbeispiel ist das Flugkreisprofil 13 ein um die Drehachse 1 umlaufender Kegelabschnitt, von dem hier der besseren Übersichtlichkeit halber nur ein kurzer Linienabschnitt an der in Fig. 2 obersten Schneide 2 dargestellt ist. Das Flugkreisprofil 13 liegt im Punkt P in einem Einstellwinkel κ zur Drehebene D. Da hier beispielhaft ein kegelförmiges Flugkreisprofil 13 gewählt ist, gilt für sämtliche Punkte P entlang der Schneidkanten 3 ein identischer Einstellwinkel κ. Der Einstellwinkel κ kann nahezu beliebig gewählt werden, sofern er von 0° oder 90° abweicht. Vorteilhaft liegt er in einem Bereich von einschl. 20° bis einschl. 70°, insbesondere in einem Bereich von einschl. 30° bis einschl. 60°, und beträgt im gezeigten Ausführungsbeispiel zumindest näherungsweise 35°.

Durch den im gezeigten Ausführungsbeispiel für sämtliche Punkte P entlang der Schneidkante 3 konstanten Einstellwinkel κ und dem daraus folgenden kegelförmigen Flugkreisprofil 13 wird an dem mittels des Bearbeitungswerkzeuges 9 zerspanend bearbeiteten Werkstück eine Fase mit einem Winkel entsprechend dem Einstellwinkel κ ausgebildet. Neben abweichenden Einstellwinkeln κ kann es aber auch zweckmäßig sein, ein von der Kegelform abweichendes, profiliertes und ggf. auch unregelmäßig profiliertes Flugkreisprofil 13 zu wählen, wobei sich dann in unterschiedlichen Punkten P entlang einer einzelnen Schneidkante 3 örtlich unterschiedliche Einstellwinkel κ ergeben. Dabei kann es zweckmäßig sein, dass die jeweiligen örtlichen Einstellwinkel κ in sämtlichen Punkten P entlang der Schneidkante 3 in den oben genannten Zahlenbereichen liegen. Ebenso kann es aber auch zweckmäßig sein, dass dies nur für einen oder mehrere Teilbereiche einer einzelnen Schneidkante 3 gilt. Außerdem können am Werkstück Profile erzeugt werden, deren räumliche Erstreckung größer als der Schnittbereich einer einzelnen umlaufenden Reihe von Schneiden 2 ist. In diesem Fall wird dann das Gesamtprofil auf mehrere, hier nicht dargestellte umlaufende Reihen von Schneiden 2 verteilt. In einem solchen Falle und insbesondere dann, wenn das zu erzeugende Profil sehr unregelmäßig mit großen Abweichungen der örtlichen Einstellwinkel κ ist, kann der Fall eintreten, dass im Rahmen der Erfmdung nur ein Teil der Schneiden 2 bzw. ein Teil von umlaufenden Reihen davon die vorgenannten Winkelbedingungen des Einstellwinkels κ erfüllt, während einzelne andere Schneiden 2 bzw. umlaufende Reihen davon nicht in den oben aufgeführten Zahlenbereichen des Einstellwinkels κ liegen.

Aus Fig. 2 ergibt sich des Weiteren, dass die Schneiden 2 mit ihren Schneidkanten 3 in einem Achswinkel λ zur Drehachse 1 liegen. In der radialen Draufsicht sind die Schneidkanten 3 im gezeigten Ausführungsbeispiel geradlinig ausgeführt, so dass der Achswinkel λ entlang der Schneidkante 3 und- wie hier - bei hinreichend kurzen Schneidkanten 3 in jedem Punkt P mit hinreichender Genauigkeit näherungsweise konstant ist. Damit lässt sich der mittlere Achswinkel λ zwischen einer durch den Verlauf der Schneidkante 3 vorgegebenen Geraden 14 und der parallel zur Drehachse 1 liegenden Geraden 10 ermitteln. Insbesondere bei längeren Schneidkanten 3 kann eine spiralförmige Ausführung der Schneidkanten 3 vorteilhaft sein, wobei dann tatsächlich für jeden Punkt P auf der Schneidkante 3 gleiche Achswinkel λ gelten. Es kann aber auch zweckmäßig sein, dass die Schneidkanten 3 in der radialen Draufsicht zumindest abschnittsweise gewölbt bzw. profiliert sind. In diesem Falle und im Falle von in der radialen Draufsicht geraden, aber längeren Schneidkanten 3 ergeben sich für unterschiedliche Punkte P entlang der Schneidkante örtlich unterschiedliche Achswinkel λ. Hierbei, aber auch in jedem beliebigen anderen Falle kann dann der örtliche Achswinkel λ zwischen der Geraden 10 und einer solchen Geraden 14 ermittelt werden, die im jeweiligen Punkt P tangential an der Schneidkante 3 anliegt. Alternativ kann der Achswinkel λ auch zwischen dem im Punkt P senkrecht zur Schneidkante 3 bzw. zur Geraden 14 stehenden Richtungspfeil 11 und der Drehbewegungsrichtung 4 ermittelt werden, was hier aber der besseren Übersichtlichkeit halber zeichnerisch nicht dargestellt ist.

Der Achswinkel λ ist in jedem Fall > 0°, liegt vorteilhaft in einem Bereich von einschl. 55° bis < 90°, bevorzugt in einem Bereich von einschl. 60 ° bis einschl. 80° und beträgt insbesondere wie hier im gezeigten Ausführungsbeispiel etwa 70°. Die vorgenannten Winkelangaben gelten für sämtliche Punkte P entlang einer einzelnen Schneidkante 3. Bei einer ausgeprägten Profilierung der Schneidkante 3 kann es aber auch zweckmäßig sein, dass dies nur für Teilbereiche davon gilt.

Insbesondere anhand der in Fig. 2 oben dargestellten Schneide 2 ist erkennbar, dass die Schneidkanten 3 zwar in ihrer radialen Draufsicht, nicht aber in ihrer tangentialen Ansicht geradlinig verlaufen. Entsprechend der tangentialen Ansicht der in Fig. 2 oberen Schneide 2 sind die Schneidkanten 3 der Schneiden 2 derart ballig profiliert, dass sie entlang ihrer gesamten Länge auf einem gemeinsamen Flugkreisprofil 13 verlaufen. Die ballige Profilierung führt in Verbindung mit dem Achswinkel λ dazu, dass sich entlang der gesamten Länge der Schneidkanten 3 das hier beispielhaft gewählte kegelförmige Flugkreisprofil 13 ausbildet.

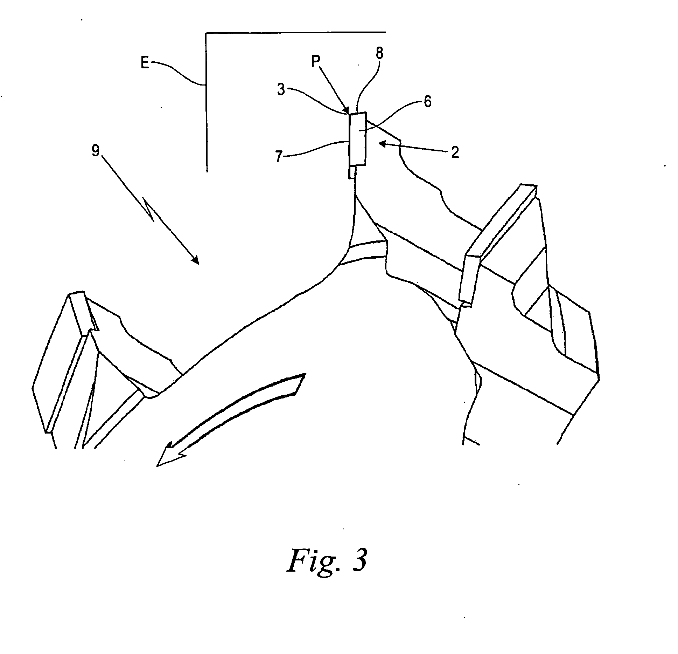

Schließlich ist in Fig. 2 noch zu erkennen, dass jede einzelne Schneide 2 eine in der Drehbewegungsrichtung 4 vorlaufende Spanfläche 7 sowie eine radial äußere Freifläche 8 aufweist, wobei die Spanfläche 7 und die Freifläche 8 entlang der Schneidkante 3 aneinander angrenzen. Einzelheiten hierzu sind weiter unten näher im Zusammenhang mit den Fig. 3 bis 6 beschrieben.

Fig. 3 zeigt eine perspektivische Ansicht des Bearbeitungswerkzeuges 9 nach den Fig. 1 und 2, die derart gewählt ist, dass eine einzelne Schneide 2 bzw. eine einzelne Schneidplatte 6 in einer Stirnansicht dargestellt ist. Hieraus folgt, dass die zugeordnete Spanfläche 7 und die zugeordnete Freifläche 8 als Linien erscheinen, während die Schneidkante 3 mit dem Punkt P punktförmig in Erscheinung tritt. Es ist eine Querschnittsebene E der Schneide 2 gebildet, die den Punkt P enthält, und die im Punkt P senkrecht zur Schneidkante 3 liegt. Damit liegt die Querschnittsebene E auch parallel zur Zeichnungsebene der Fig. 3.

Fig. 4 zeigt in einer schematischen radialen Draufsicht eine einzelne Umfangsschneide 2 nach den Fig. 1 bis 3 mit ihrer dem Betrachter zugewandten Freifläche 8. Darin sind eingezeichnet die Drehbewegungsrichtung 4 sowie der senkrecht zur Schneidkante 3 stehende Richtungspfeil 11. Die Drehebene D enthält den Punkt P. Die durch den Punkt P verlaufende Drehbewegungsrichtung 4 liegt in der Drehebene D. Die Querschnittsebene E der Schneide 2 enthält ebenfalls den Punkt P, demnach der Punkt P gleichermaßen auf der Schneidkante 3, in der Drehebene D und in der Querschnittsebene E liegt. Außerdem steht die Querschnittsebene E senkrecht zu der in der gezeigten radialen Ansicht geradlinigen Schneidkante 3. Bei einem geschwungenen Verlauf der Schneidkante 3 steht ihre jeweilige Querschnittsebene E senkrecht zu derjenigen Tangente bzw. Geraden 14 (Fig. 2), die im Punkt P tangential an der Schneidkante 3 anliegt. Die Drehebene D und die Querschnittsebene E liegen im Achswinkel λ zueinander.

Die Querschnittsebene E gibt eine Querschnittsansicht der Schneide 2 entlang einer Linie V-V vor, die in Fig. 5 dargestellt ist. Die Drehebene D gibt eine Schnittdarstellung entlang einer Linie VI-VI vor, die in Fig. 6 dargestellt ist.

Fig. 5 zeigt eine schematische, nicht maßstabsgerechte Querschnittsdarstellung der Schneide 2 nach Fig. 4 entlang der dort dargestellten Linie V-V in der ebenfalls dort dargestellten Querschnittsebene E. Die Schnittebene nach Fig. 5 bzw. die Querschnittsebene E nach Fig. 4 entsprechen damit der Stirnansicht nach Fig. 3. Demnach spannen der Richtungspfeil 11 und die senkrecht zur Zeichnungsebene nach Fig. 4 stehende Radialrichtung 12 ein rechtwinkliges kartesisches Koordinatensystem auf, welches zur Bestimmung der einzelnen Schneidenwinkel dient. In der gezeigten Querschnittsdarstellung spannen die Spanfläche 7 und die Freifläche 8 innerhalb des Querschnittes der Schneide 2 einen Keilwinkel β auf. Die Spanfläche 7 liegt relativ zur Radialrichtung 12 in einem Spanwinkel γ, während die Freifläche 8 relativ zum Richtungspfeil 11 in einem Freiwinkel α liegt. Nach der üblichen und auch hier angewandten Definition weisen der Freiwinkel α und der Spanwinkel γ dann einen positiven Betrag auf, wenn sie bzw. die Freifläche 8 und die Spanfläche 7 innerhalb desjenigen Quadranten des vorgenannten kartesischen Koordinatensystems liegen, welcher in der der Radialrichtung 12 und auch dem Richtungspfeil 11 entgegengesetzten Richtung liegt. Anders ausgedrückt führen im Vorzeichen positive Freiwinkel α und Spanwinkel γ mit steigendem Betrag zu einer Verringerung des Keilwinkels β. Demnach sind im Ausführungsbeispiel nach Fig. 5 ein negativer Freiwinkel α und ein positiver Spanwinkel γ dargestellt.

Nach der Erfindung ist vorgesehen, dass der in der Querschnittsebene E (Fig. 4) der Schneide 2 gemessene und in Fig. 5 dargestellte Freiwinkel α ≤ 0° ist. Vorteilhaft ist er < 0°, liegt bevorzugt in einem Bereich von einschl. -1° bis einschl. -10° und beträgt insbesondere wie hier im gezeigten Ausführungsbeispiel zumindest näherungsweise -6°.

Der Spanwinkel γ ist mit positivem Betrag dargestellt, kann aber auch ebenso wie der Freiwinkel α einen negativen Betrag aufweisen. Da sich der Freiwinkel α, der Spanwinkel γ und der Keilwinkel β definitionsgemäß zusammen zu 90° aufaddieren, sind der Freiwinkel α und der Spanwinkel γ vorteilhaft so einzustellen, dass der in der Querschnittsebene E (Fig. 4) der Schneide 2 gemessene und in Fig. 5 dargestellte Keilwinkel ≥ 90° ist, bevorzugt in einem Bereich von einschl. 90° bis einschl. 110° liegt und insbesondere etwa 100° beträgt. Der Keilwinkel β nach Fig. 5 ist maßgeblich für die Standzeit der Schneidkante 3. Infolge seines großen Betrages ist eine hohe Standzeit mit geringer Neigung zum Stumpfwerden bzw. mit geringer Neigung zu Ausbrüchen erzielt.

Fig. 6 zeigt eine schematische, nicht maßstabsgerechte Schnittdarstellung der Schneide 2 nach Fig. 4 entlang der dort dargestellten Schnittlinie VI-VI bzw. in der ebenfalls dort dargestellten Drehebene D. Hierin spannen die Radialrichtung 12 und die Drehbewegungsrichtung 4 ein rechtwinkliges kartesisches Koordinatensystem auf, welches zur Bestimmung der beim Zerspanungsvorgang auf das Werkstück einwirkenden effektiven Schneidkantenwinkel dient. Entsprechend der Darstellung der Fig. 6 bildet sich in der Schneide 2 in der gezeigten Drehebene D (Fig. 4) ein effektiver Freiwinkel α_{eff}, ein effektiver Keilwinkel β_{eff} und ein effektiver Spanwinkel γ_{eff} an der Schneidkante 3, der Spanfläche 7 und der Freifläche 8 aus. Aus der Zusammenschau der Fig. 6 mit Fig. 5 ist leicht zu erkennen, dass sich der effektive Freiwinkel α_{eff}, der effektive Keilwinkel β_{eff} und der effektive Spanwinkel γ_{eff} jeweils deutlich vom in der Querschnittsebene E (Fig. 4) der Schneide 2 gemessenen Freiwinkel α, Keilwinkel β und Spanwinkel γ nach Fig. 5 unterscheiden.

Der Achswinkel λ und der Einstellwinkel κ (Fig. 2) sind im Rahmen der vorstehend beschriebenen Zahlenwerte derart aufeinander abgestimmt und führen in ihrem Zusammenspiel dazu, dass sich trotz des negativen Freiwinkels α nach Fig. 5 ein für die Zerspanung des Werkstückes maßgeblicher positiver effektiver Freiwinkel α_{eff} einstellt. Der effektive Keilwinkel β_{eff} ist deutlich kleiner als der tatsächliche Keilwinkel β nach Fig. 5, so dass in der Folge der effektive Spanwinkel γ_{eff} gegenüber dem tatsächlichen Spanwinkel γ nach Fig. 5 zwar im Vorzeichen positiv bleibt, im Betrag jedoch deutlich größer ist. Ebenso wie durch den positiven effektiven Freiwinkel α_{eff} kann auch durch den vergrößerten positiven effektiven Spanwinkel γ_{eff} in Verbindung mit dem verkleinerten effektiven Keilwinkel β_{eff} das Schnitt- bzw. Zerspanungsergebnis deutlich verbessert werden.

Die gegenseitige geometrische Abstimmung bzw. Anpassung von Achswinkel λ, Einstellwinkel κ (Fig. 2), Freiwinkel α und Keilwinkel β (Fig. 5) bieten dem Konstrukteur großen Spielraum, verschiedene gewünschte Ergebnisse zu erzielen. Beispielsweise kann der Freiwinkel α mit negativem Betrag so groß eingestellt werden, dass sich ein effektiver Freiwinkel α_{eff} mit dem Betrag von zumindest näherungsweise 0 einstellt. Natürlich kann auch ein positiver effektiver Freiwinkel α_{eff} entsprechend der Darstellung nach Fig. 6 eingestellt werden. Darüber hinaus kann auch entgegen der Darstellung nach Fig. 5 ein negativer Spanwinkel γ eingestellt werden, wobei sich durch entsprechende Anpassung der übrigen Parameter (Achswinkel λ, Einstellwinkel κ nach Fig. 2) trotzdem ein positiver effektiver Spanwinkel γ_{eff} nach Fig. 6 einstellt. In jedem Falle ist aber ein Freiwinkel α ≤ 0° zu wählen und eine Abstimmung von Achswinkel λ und Einstellwinkel κ derart vorzunehmen, dass der effektive Freiwinkel α_{eff} ≥ 0° ist.

Im gezeigten Ausführungsbeispiel gelten die vorgenannten Winkelangaben insbesondere zum Freiwinkel α und zum effektiven Freiwinkel α_{eff} für sämtliche Punkte P entlang der gesamten Länge der Schneidkante 3. Bei einer Ausbildung der Schneidkanten 3 mit einem von der gezeigten Kegelform abweichenden profilierten Flugkreisprofil 13 (Fig. 2) und insbesondere bei ausgeprägt bzw. unregelmäßig profilierten Schneidkanten 3 kann es aber auch vorteilhaft sein, dass die vorgenannten Winkelangaben nur auf Punkten P entlang eines oder mehrerer Teilabschnitte der Schneidkante 3 erfüllt sind. Für den weiter oben erwähnten Fall, dass am Werkstück Profile erzeugt werden sollen, deren räumliche Erstreckung größer als der Schnittbereich einer einzelnen umlaufenden Reihe von Schneiden 2 ist, wobei dann das Gesamtprofil auf mehrere, hier nicht dargestellte umlaufende Reihen von Schneiden 2 verteilt wird, und wobei nur ein Teil der Schneiden 2 die vorgenannten Winkelbedingungen des Einstellwinkels κ und des Achswinkel λ erfüllt, gelten im Rahmen der Erfmdung auch nur für diesen Teil der Schneiden 2 die vorstehenden Angaben zum Freiwinkel α, zum Keilwinkel β, zum Spanwinkel γ, zum effektiven Freiwinkel α_{eff}, zum effektiven Keilwinkel β_{eff} und zum effektiven Spanwinkel γ _{eff}. Bei einzelnen anderen Schneiden 2 bzw. umlaufenden Reihen davon, die nicht in den oben aufgeführten Zahlenbereichen des Einstellwinkels κ und des Achswinkel λ liegen, wird vorteilhaft ein positiver Freiwinkel α gewählt.

In der Zerspanungslehre von Metallbearbeitungswerkzeugen wird der Achswinkel λ (so auch in der DIN 6581) als "Neigungswinkel" bezeichnet. Abweichend von der Norm soll hier die in der Holzbearbeitung gängige Bezeichnung "Achswinkel" Verwendung finden, da dieser Begriff der Tatsache, dass es sich um einen Winkel zur Werkzeugachse bzw. Drehachse 1 handelt, besser Rechnung trägt. Alle anderen Winkelangaben beziehen sich auf die DIN 6581.

Bei den Winkeln des erfindungsgemäßen Bearbeitungswerkzeugs 9 handelt es sich immer um die Winkel der Schneidkanten 3 an sich und nicht um etwaige Fasen (Schutzfasen) oder Verrundungen (Radien) an den Schneidkanten 3, wie sie beispielsweise an keramischen Schneiden angebracht werden, um diese vor Ausbrüchen zu schützen. Auch beim in der Holzbearbeitung üblichen Jointen wird der Werkzeugschneide nur eine Fase aufgeprägt, nicht aber die generelle Geometrie der Schneide verändert. Selbstverständlich ist es auch bei der erfindungsgemäßen Ausprägung der Schneidkanten 3 möglich, Schutzfasen, Kantenverrundungen und Jointfasen an der Schneide anzubringen.

## Patentansprüche

1. Bearbeitungswerkzeug (9) für die zerspanende Bearbeitung von Werkstoffen, insbesondere für Holz oder holzartige Werkstoffe, Metalle, Kunststoffe und/oder Verbundwerkstoffe, vorgesehen zum drehenden Antrieb um eine Drehachse (1), umfassend eine Anzahl von Schneiden (2) mit Schneidkanten (3) und mindestens einem Punkt (P) auf der Schneidkante (3), wobei die Schneidkanten (3) infolge ihrer Drehung um die Drehachse (1) ein um die Drehachse (1) umlaufendes Flugkreisprofil (13) beschreiben, wobei eine Drehebene (D) vorgesehen ist, die den Punkt (P) enthält und senkrecht zur Drehachse (1) liegt, wobei eine Querschnittsebene (E) der Schneide (2) vorgesehen ist, die den Punkt (P) enthält und im Punkt (P) senkrecht zur Schneidkante (3) liegt, wobei die Schneidkante (3) im Punkt (P) und in der Querschnittsebene (E) einen Freiwinkel (α), einen Keilwinkel (β) und einen Spanwinkel (γ) aufweist, wobei die Schneidkante (3) im Punkt (P) in einem Achswinkel (λ) zur Drehachse (1) liegt, wobei das Flugkreisprofil (13) im Punkt (P) in einem Einstellwinkel (κ) zur Drehebene (D) liegt, wobei die Schneidkante (3) im Punkt (P) und in der Drehebene (D) einen effektiven Freiwinkel (α_{eff}), einen effektiven Keilwinkel (β_{eff}) und einen effektiven Spanwinkel (γ_{eff}) aufweist,
**dadurch gekennzeichnet, dass** der Freiwinkel (α) ≤ 0° ist, wobei der Achswinkel (λ) und der Einstellwinkel (κ) derart aufeinander abgestimmt sind, dass der effektive Freiwinkel (α_{eff}) ≥ 0° ist.

2. Bearbeitungswerkzeug nach Anspruch 1,
**dadurch gekennzeichnet, dass** der Freiwinkel (α) < 0° ist, bevorzugt in einem Bereich von einschließlich -1° bis einschließlich -10° liegt und insbesondere zumindest näherungsweise -6° beträgt.

3. Bearbeitungswerkzeug nach Anspruch 1 oder 2,
**dadurch gekennzeichnet, dass** der Achswinkel (λ) in einem Bereich von einschließlich 55° bis < 90° liegt, bevorzugt in einem Bereich von einschließlich 60° bis einschließlich 80° liegt und insbesondere etwa 70° beträgt, und dass der Einstellwinkel (κ) in einem Bereich von einschließlich 20° bis einschließlich 70° und insbesondere in einem Bereich von einschließlich 30° bis einschließlich 60° liegt.

4. Bearbeitungswerkzeug nach einem der Ansprüche 1 bis 3,
**dadurch gekennzeichnet, dass** der Keilwinkel (β) ≥ 90° ist, bevorzugt in einem Bereich von einschließlich 90° bis einschließlich 110° liegt und insbesondere etwa 100° beträgt.

5. Bearbeitungswerkzeug nach einem der Ansprüche 1 bis 4,
**dadurch gekennzeichnet, dass** die Schneidkante (3) entlang ihrer gesamten Länge auf sämtlichen Punkten (P) einen Freiwinkel (α) von ≤ 0° und einen effektiven Freiwinkel (α_{eff}) von ≥ 0° aufweist.

6. Bearbeitungswerkzeug nach einem der Ansprüche 1 bis 4,
**dadurch gekennzeichnet, dass** die Schneidkanten (3) der Schneiden (2) zur Ausbildung eines von der Kegelform abweichenden profilierten Flugkreisprofils (13) geformt sind, wobei die Schneidkante (3) nur auf Punkten (P) entlang eines Teilabschnittes der Schneidkante (3) einen Freiwinkel (α) von ≤ 0° und einen effektiven Freiwinkel (α_{eff}) von ≥ 0° aufweist.

7. Bearbeitungswerkzeug nach einem der Ansprüche 1 bis 6,
**dadurch gekennzeichnet, dass** die Schneidkanten (3) der Schneiden (2) derart ballig profiliert sind, dass sie entlang ihrer gesamten Länge auf einem gemeinsamen Flugkreisprofil (13) und insbesondere auf einem gemeinsamen Flugkreiskegel verlaufen.

8. Bearbeitungswerkzeug nach einem der Ansprüche 1 bis 7,
**dadurch gekennzeichnet, dass** das Bearbeitungswerkzeug (9) einen Grundkörper (5) und separat davon als Schneidplatten (6) ausgeführte Schneiden (2) aus einem hochharten Schneidstoff, insbesondere aus Hartmetall, Schneidkeramik, monokristallinem Diamant, PKD oder CVD umfasst.

## Claims

1. Machining tool (9) for machining materials, in particular for wood or wood-like materials, metals, plastics and / or composite materials, provided for driving in rotation around a rotation axis (1), comprising a number of blades (2) with cutting edges (3) and at least one point (P) on the cutting edge (3), wherein the cutting edges (3), due to their rotation around the rotation axis (1), define a circular movement profile (13) around the rotation axis (1), wherein a rotation plane (D) is provided which contains the point (P) and lies perpendicular to the rotation axis (1), wherein a cross-section plane (E) of the blade (2) is provided which contains the point (P) and lies at the point (P) perpendicular to the cutting edge (3), wherein the cutting edge (3) has at the point (P) and in the cross-section plane (E) a clearance angle (α), a wedge angle (β) and a rake angle (γ), wherein the cutting edge (3) lies at the point (P) at an axial angle (λ) relative to the rotation axis (1), wherein the circular movement profile (13) lies at the point (P) at an adjusting angle (κ) relative to the rotation plane (D), wherein the cutting edge (3) has at the point (P) and in the rotation plane (D) an effective clearance angle (α_{eff}), an effective wedge angle (β_{eff}) and an effective rake angle (γ_{eff}),
**characterised in that** the clearance angle (α) ≤ 0°, wherein the axial angle (λ) and the adjusting angle (κ) are orientated relative to each other in such a way that the effective clearance angle (α_{eff}) ≥ 0°.

2. Machining tool according to claim 1,
**characterised in that** the clearance angle (α) < 0°, preferably in a range of from -1° to -10° inclusive and in particular is at least approximately -6°.

3. Machining tool according to claim 1 or 2,
**characterised in that** the axial angle (λ) lies in a range of from 55° to < 90° inclusive, preferably in a range of from 60° to 80° inclusive and in particular is approximately 70°, and the adjusting angle (κ) lies in a range of from 20° to 70° inclusive and in particular in a range of from 30° to 60° inclusive.

4. Machining tool according to one of the claims 1 to 3,
**characterised in that** the wedge angle (β) ≥ 90°, preferably in a range of from 90° to 110° inclusive and in particular is approximately 100°.

5. Machining tool according to one of the claims 1 to 4,
**characterised in that** the cutting edge (3) has along its whole length at all points (P) a clearance angle (α) of ≤ 0° and an effective clearance angle (α_{eff}) of ≥ 0°.

6. Machining tool according to one of the claims 1 to 4,
**characterised in that** the cutting edges (3) of the blades (2) are configured to form a profiled circular movement profile (13) deviating from the conical form, wherein the cutting edge (3) has a clearance angle (α) of ≤ 0° and an effective clearance angle (α_{eff}) of ≥ 0° only at points (P) along a partial section of the cutting edge (3).

7. Machining tool according to one of the claims 1 to 6,
**characterised in that** the cutting edges (3) of the blades (2) are spherically profiled in such a way that they extend along their whole length on a common circular movement profile (13) and in particular on a common circular movement cone.

8. Machining tool according to one of the claims 1 to 7,
**characterised in that** the machining tool (9) comprises a base body (5) and, separately from this, blades (2) configured as cutting plates (6), made from a high strength cutting material, in particular hard metal, cutting ceramics, mono-crystalline diamond, PCD or CVD.

## Revendications

1. Outil d'usinage (9) pour l'usinage avec enlèvement de copeaux de matériaux, en particulier pour le bois ou des matériaux du type bois, des métaux, des matières plastiques et/ou des matériaux composites, destiné à être entraîné en rotation sur un axe de rotation (1), comprenant un certain nombre de lames (2) avec des arêtes de coupe (3) et au moins un point (P) sur l'arête de coupe (3), étant précisé que les arêtes de coupe (3), du fait qu'elles tournent sur l'axe de rotation (1), décrivent un profil circulaire de trajectoire (13) autour dudit axe de rotation (1), qu'il est prévu un plan de rotation (D) qui contient le point (P) et qui est perpendiculaire à l'axe de rotation (1), qu'il est prévu un plan de coupe transversale (E) de la lame (2) qui contient le point (P) et qui, au point (P), est perpendiculaire à l'arête de coupe (3), que l'arête de coupe (3) présente au point (P) et dans le plan de coupe transversale (E) un angle de dépouille (α), un angle de taillant (β) et un angle de coupe orthogonal (γ), que l'arête de coupe (3), au point (P), définit un angle d'axe (λ) par rapport à l'axe de rotation (1), que le profil circulaire de trajectoire (13), au point (P), définit un angle de direction d'outil (κ) par rapport au plan de rotation (D), que l'arête de coupe (3), au point (P) et dans le plan de rotation (D), présente un angle de dépouille effectif (α_{eff}), un angle de taillant effectif (β_{eff}) et un angle de coupe orthogonal effectif (γ_{eff}),
**caractérisé en ce que** l'angle de dépouille (α)≤0°, étant précisé que l'angle d'axe (λ) et l'angle de réglage (κ) sont adaptés l'un à l'autre de telle sorte que l'angle de dépouille effectif (α_{eff})≥0°.

2. Outil d'usinage selon la revendication 1,
**caractérisé en ce que** l'angle de dépouille (α)<0°, est situé de préférence dans une plage de -1° inclus à -10° inclus et est en particulier au moins approximativement de -6°.

3. Outil d'usinage selon la revendication 1 ou 2,
**caractérisé en ce que** l'angle d'axe (λ) est situé dans une plage de 55° inclus à <90°, est situé de préférence dans une plage de 60° inclus à 80° inclus et est de préférence d'environ 70°, et **en ce que** l'angle de direction d'outil (κ) est situé dans une plage de 20° inclus à 70° inclus, et en particulier dans une plage de 30° inclus à 60° inclus.

4. Outil d'usinage selon l'une des revendications 1 à 3,
**caractérisé en ce que** l'angle de taillant (β)≥90°, est situé de préférence dans une plage de 90° inclus à 110° inclus, et est de préférence d'environ 100°.

5. Outil d'usinage selon l'une des revendications 1 à 4,
**caractérisé en ce que** l'arête de coupe (3) présente sur toute sa longueur, sur tous les points (P), un angle de dépouille (α) ≤0° et un angle de dépouille effectif (α_{eff})≥0°.

6. Outil d'usinage selon l'une des revendications 1 à 4,
**caractérisé en ce que** les arêtes de coupe (3) des lames (2) sont conçues pour former un profil circulaire de trajectoire (13) profilé différemment de la forme conique, étant précisé que l'arête de coupe (3) ne présente que sur les points (P) situés le long d'un tronçon partiel de l'arête de coupe (3) un angle de dépouille (α)≤0° et un angle de dépouille effectif (α_{eff})≥0°.

7. Outil d'usinage selon l'une des revendications 1 à 6,
**caractérisé en ce que** les arêtes de coupe (3) des lames (2) ont un profil bombé tel qu'elles s'étendent sur toute leur longueur sur un profil circulaire de trajectoire (13) commun et en particulier sur un cône circulaire de trajectoire commun.

8. Outil d'usinage selon l'une des revendications 1 à 7,
**caractérisé en ce que** l'outil d'usinage (9) comprend un corps de base (5) et, séparément par rapport à celui-ci, des lames (2) réalisées sous la forme de plaquettes de coupe (6) en matériau de coupe à dureté élevée, en particulier en métal dur, en céramique de coupe, en diamant monocristallin, en PCD ou CVD.
